# FASCICULE DE BREVET EUROPEEN

(11) **EP 3 762 264 B1**
(45) Date de publication et mention de la délivrance du brevet: **08.11.2023**
(21) Numéro de dépôt: 19717510.2
(22) Date de dépôt: 27.02.2019
(51) Int. Cl.: B60R 19/02, B60R 19/18

(54) **JUPE INFERIEUR DE PARECHOC A EXTENSIONS DE RENFORT**
UNTERE STOSSFÄNGERSCHÜRZE MIT VERSTÄRKUNGSVERLÄNGERUNGEN
BUMPER LOWER SKIRT WITH REINFORCEMENT EXTENSIONS

(30) Priorité: 06.03.2018 FR 1851921
(43) Date de publication de la demande: 13.01.2021
(73) Titulaire: PSA Automobiles SA, 78300 Poissy (FR)
(72) Inventeur: GALBRUN, Sebastien, 94260 FRESNES (FR)
(86) Numéro de dépôt international: PCT/FR2019/050453
(87) Numéro de publication internationale: WO 2019/170983

(56) Documents cités:
- WO-A1-2010/084277
- DE-A1-102016 204 483
- FR-A1- 2 920 724
- US-A- 5 984 389

## Description

L'invention concerne une jupe inférieure d'un parechoc de véhicule, ainsi qu'un parechoc de véhicule et un véhicule comprenant un tel parechoc.

Il est connu de réaliser un parechoc de véhicule comportant une peau supérieure formant la partie haute du parechoc lorsque ledit parechoc est installé sur un véhicule, et une jupe inférieure formant la partie basse dudit parechoc, située en dessous de la peau supérieure, c'est-à-dire située plus bas que la peau supérieure, et formant la partie basse dudit parechoc. Par exemple, le brevet FR2920724 décrit un parechoc comportant une jupe inférieure formant la partie basse du parechoc, et une peau supérieure formant la partie haute du parechoc située au-dessus de la jupe inférieure. La jupe inférieure et la peau supérieure sont bords à bords. La jupe inférieure comporte une entrée d'air vers le système de refroidissement du moteur du véhicule. Une pièce de support est située au-dessus de la jupe inférieure, derrière la peau supérieure, et est reliée à ladite jupe inférieure par des pattes. La pièce de support et la jupe inférieure forment une seule pièce. Par exemple, le brevet US 5 984 389 A décrit un parechoc comportant une jupe inférieure formant la partie basse du parechoc, et une peau supérieure formant la partie haute du parechoc.

La pièce support est disposée en partie milieu de la face avant du véhicule suivant l'axe transversal du véhicule. C'est-à-dire qu'elle s'étend de part et d'autre de manière symétrique d'un plan médian longitudinal et vertical au véhicule. La peau supérieure est fixée à la pièce de support. La peau supérieure se positionne et se fixe donc contre la pièce de support, en vis-à-vis et devant celle-ci. La jupe inférieure avec la pièce de support se fixe à la structure du véhicule. La pièce de support comporte un élément décoratif, notamment une grille de calandre, qui se place en vis-à-vis d'une ouverture dans la peau supérieure afin d'être visible depuis l'extérieur du véhicule.

L'inconvénient d'une telle solution est qu'elle ne permet d'augmenter la rigidité de la peau supérieure qu'au niveau de la partie médiane du parechoc, et non en partie latérale du véhicule. Un autre inconvénient est que cette solution utilise beaucoup de matières, et donc est lourde et chère à réaliser.

L'objectif de l'invention est de remédier à ces inconvénients. En particulier, un des buts de l'invention est de proposer une solution permettant de rigidifier localement une peau de parechoc de chaque côté de l'axe médian du parechoc, dans des zones éloignées les unes des autres, et qui soit de conception simple et légère.

Ce but est atteint selon l'invention, grâce à une jupe inférieure de parechoc destinée à être fixée sur un véhicule pour former la partie basse d'un parechoc avant ou arrière d'un véhicule lorsqu'un tel parechoc est installé sur un véhicule, comportant une partie frontale inférieure destinée à être placée en face avant ou arrière du véhicule lorsque la jupe inférieure est fixée au véhicule, deux joues latérales inférieures disposées chacune sur des bords opposés de la partie frontale inférieure, s'étendant toutes les deux du même côté de la partie frontale inférieure et destinées à s'étendre sur chacun des flancs latéraux du véhicule depuis la partie frontale inférieure lorsque la jupe inférieure est fixée au véhicule, des moyens de fixation disposés le long d'un bord supérieur de la jupe inférieure qui forme un bord continu le long des deux joues latérales inférieures et de la partie frontale inférieure, lesdits moyens de fixation étant destinés à fixer une peau supérieure de parechoc sur ladite jupe inférieure, remarquable en ce que la jupe inférieure comporte en outre deux extensions s'étendant depuis le bord supérieur de la jupe inférieure, sensiblement dans le prolongement de la partie frontale inférieure et disposées chacune de manière symétrique de chaque côté d'un plan médian de la jupe inférieure, distantes l'une de l'autre symétriquement par rapport à ce plan médian.

Ainsi avantageusement, ces extensions permettent de former des surfaces rigides contre lesquelles peut s'appuyer une peau de parechoc fixée le long du bord supérieur de la jupe inférieure comportant les moyens de fixation. La disposition symétrique de ces extensions de chaque côté du plan médian de la partie frontale, éloignées l'une de l'autre, permet de renforcer une peau de parechoc dans ces zones, lorsqu'une telle peau supérieure est fixée à la jupe inférieure et s'appuie contre ces extensions. De plus, cette disposition permet d'amener des extrémités de ces extensions à proximité de projecteurs d'éclairage ou de feux d'éclairage du véhicule qui sont eux aussi généralement disposées symétriquement par rapport à ce même plan médian, éloignés les uns des autres et souvent éloignées du bord supérieur de la jupe inférieure, et ainsi permettre une coopération entre ces extensions et les projecteurs ou les feux.

De préférence, les extensions sont disposées à proximité des bords latéraux de la partie frontale, au plus près des joues latérales.

Selon un mode de réalisation préféré de l'invention, la jupe inférieure comporte deux ouvertures disposées sur la partie frontale inférieure de la jupe inférieure, chacune en vis-à-vis d'une des extensions.

Ainsi avantageusement, ces extensions renforcent la jupe inférieure dans une zone fragilisée par les ouvertures. Elle conserve alors une bonne rigidité et une bonne capacité à maintenir la peau de parechoc fixée dessus, même au niveau de sa partie comportant les ouvertures, grâce à la présence des extensions. Ces ouvertures sont par exemple destinées à former une entrée d'air pour un échangeur de température du véhicule ou à recevoir en support de projecteur antibrouillard ou d'un autre type.

Selon un autre mode de réalisation de l'invention, les extensions comportent des bords tombés sur leurs extrémités opposées à celles reliées à la jupe inférieure, lesdits bords tombés étant orientés du même côté de la partie frontale inférieure de la jupe inférieure que celui dans lequel s'étendent les joues latérales inférieures.

Ainsi avantageusement, les extensions sont rigidifiées par ces bords tombés.

Selon un autre mode de réalisation de l'invention, les extensions comportent des formes en creux afin de rigidifier lesdites extensions.

L'invention porte aussi sur un parechoc comportant une jupe inférieure telle que décrite précédemment, et une peau supérieure fixée à la jupe inférieure sur les moyens de fixation, ladite une peau supérieure étant disposée le long du bord supérieur de la jupe inférieure comportant les moyens de fixation.

Selon un mode de réalisation préféré de l'invention, les extensions sont au contact de la peau supérieure.

Ainsi avantageusement, les extensions soutiennent localement la peau supérieure. Dans ces parties, la peau supérieure résiste davantage à l'enfoncement en cas d'appuis dessus.

Dans un mode de réalisation, la peau supérieure comporte le long d'un de ses bords un bord tombé de forme complémentaire au bord tombé des extensions de manière en rester en contact avec lesdites extensions jusqu'aux extrémités desdites extensions et le long des bords tombés des extensions.

L'invention porte aussi sur un véhicule comprenant un parechoc tel que décrit précédemment.

Selon un mode de réalisation préféré de l'invention, le véhicule comporte des moyens de positionnement coopérant avec les extrémités des extensions.

Selon un autre mode de réalisation de l'invention, le véhicule comporte des phares et/ou des feux de signalisation, lesdits phares ou des feux de signalisation comprenant les moyens de positionnement.

Selon un mode de réalisation préféré de l'invention, les phares et/ou les feux de signalisation comportent une vitre, le moyen de positionnement étant formé par une partie en saillie de ladite vitre dirigée vers l'extension.

L'invention sera mieux comprise à la lecture de la description qui va suivre, donnée uniquement à titre d'exemple et faite en se référant aux dessins annexés, sur lesquels :
- La figure 1 est une vue en perspective de l'avant d'un véhicule comportant l'invention.
- La figure 2 est une vue de face d'une jupe inférieure de parechoc suivant l'invention.
- La figure 3 est une vue en section du parechoc suivant le plan P illustré en figure 1.

Les dessins sont des représentations schématiques pour faciliter la compréhension de l'invention. Les composants ne sont pas forcément représentés à l'échelle. Les mêmes références correspondent aux mêmes composants d'une figure à l'autre.

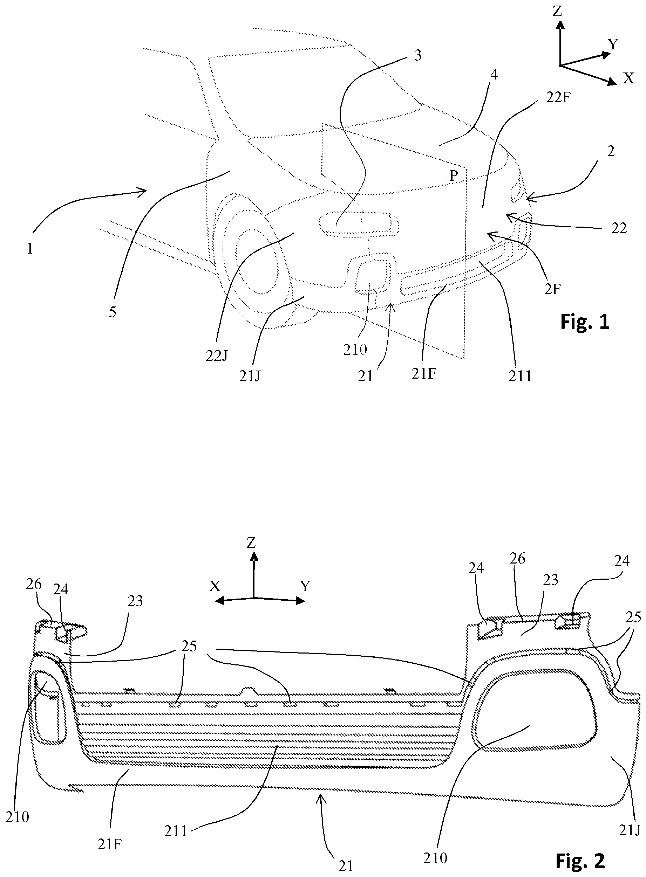

La figure 1 montre l'avant d'un véhicule 1 comportant un parechoc 2 composé d'une jupe inférieure 21 et d'une peau supérieure 22.

Un référentiel XYZ est défini par rapport au véhicule 1, dont l'axe X est suivant la direction longitudinale, l'axe Y est suivant la direction transversale et l'axe Z suivant la direction verticale du véhicule 1.

Le parechoc 2 s'étend depuis le bas de la face avant du véhicule 1 et remonte jusqu'à un capot avant 4 et des ailes avant 5 situées de chaque côté du véhicule 1. La jupe inférieure 21 forme la partie basse du parechoc 2 et la peau supérieure 22 la partie haute du parechoc 2. La peau supérieure 22 est donc disposée entre le capot avant 4, les ailes avant 5 et la jupe inférieure 21.

Le parechoc 2 comporte une partie frontale 2F s'étendant sensiblement suivant les axes X et Z, à l'extrémité avant du véhicule 1, et deux joues latérales 2J disposées de part et d'autre de la partie frontale 2F et s'étendant vers l'arrière du véhicule 1 jusqu'à un passage de roue avant. Les joues latérales 2J forment donc une partie de chacun des flancs latéraux avants du véhicule 1.

La jupe inférieure 21 s'étend sur les joues latérales 2J du parechoc 2 pour y former des joues latérales inférieures 21J. La partie de la jupe inférieure 21 disposée en partie frontale 2F du parechoc 2 forme une partie frontale inférieure 21F.

La peau supérieure 22 s'étend sur les joues latérales 2J du parechoc 2 pour y former des joues latérales supérieures 22J. La partie de la peau supérieure 22 disposée en partie frontale 2F du parechoc 2 forme une partie frontale supérieure 22F.

La peau supérieure 22 comporte des ouvertures de phares dans sa partie frontale supérieure 22F, derrière lesquelles sont disposés des projecteurs de phare 3. Ces projecteurs 3 sont disposés symétriquement par rapport à un plan médian longitudinale du véhicule 1, à proximité de la jonction entre la partie frontale supérieure 22F et les joues latérales supérieures 22J.

La jupe inférieure 21 comporte un bord supérieur au-dessus duquel s'étend la paroi supérieure 22. C'est-à-dire qu'en-dessous de ce bord supérieur, en suivant l'axe Z, la jupe inférieure 21 est visible depuis l'extérieur du véhicule 1, et au-dessus de ce bord supérieur, la paroi supérieure 22 est visible de l'extérieur du véhicule 1. Le bord supérieur de la jupe inférieure 21 s'étend depuis l'une des joues latérales inférieures 21J jusqu'à l'autre joue latérale inférieure 21J et longe la partie frontale inférieure 21F. Ce bord supérieur forme donc un bord continu depuis l'une des joues latérales inférieures 21J jusqu'à l'autre joue latérale inférieure 21J en passant par la partie frontale inférieure 21F.

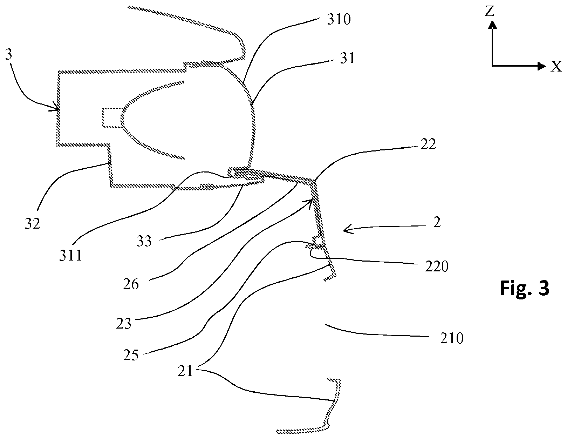

La jupe inférieure 21 comporte deux extensions 23 comme illustré en figure 2 et 3. Ces extensions 23 sont disposées sensiblement dans l'alignement des projecteurs 3 selon une direction sensiblement verticale. Elles s'étendent au-dessus du bord supérieur de la jupe inférieure 21 dans une direction sensiblement verticale. Chaque extension s'étend donc entre un des projecteurs 3 et le bord supérieur de la jupe inférieure 21. Ces extensions 23 sont disposées de part et d'autre du plan médian verticale et longitudinale au véhicule 1, sont distantes l'une de l'autre, et l'écartement entre ces deux extensions 23 est du même ordre de grandeur que l'écartement entre les deux projecteurs 3. Cette disposition permet de faire coopérer ces extensions 23 avec les projecteurs 3.

La peau supérieure 22 comporte un bord inférieur qui longe le bord supérieur de la jupe inférieure 21. La jupe inférieure 21 comporte des moyens de fixation 25 le long de son bord supérieur coopérant avec des systèmes de fixation situés sur le bord inférieur de la peau supérieure 22 afin de fixer cette peau supérieure 22 à la jupe inférieure 21. Ces moyens de fixation 25 sont par exemple des trous dans lesquels rentrent des crochets 220 formant les systèmes de fixation situés le long du bord inférieur de la peau supérieure 22. Une partie de ces moyens de fixation 25 sont situés entre les extensions 23 et la jupe inférieure 21, au niveau du bord supérieur de la jupe inférieure 21 longeant lesdites extensions 23.

Comme illustré comme figure 3 et 4, les extensions 23 sont positionnés derrière la peau supérieure 22 lorsque ladite peau 22 est fixée à la jupe inférieure 21. C'est-à-dire que les extensions 23 sont cachées par la peau supérieure 22 vue de l'extérieur du véhicule 1.

La jupe inférieure 21 comporte deux ouvertures 210, chacune en dessous de chacune des extensions 23, dans la direction verticale Z. Chacune de ces ouvertures 210 est dimensionnée pour recevoir un support de phare antibrouillard. Par exemple, ces ouvertures 210 sont de forme sensiblement rectangulaire ou trapézoïdale, dont les côtés ont des dimensions de plusieurs centimètres, par exemple supérieures à dix centimètres. En variante, ces ouvertures 210 forment des entrées d'air pour des échangeurs thermiques du moteur du véhicule 1, ou pour le refroidissement de freins.

Les extrémités des extensions 23 situées à l'opposé de la jupe inférieure 21 comportent des bords tombés 26 orientés sensiblement suivant l'axe X et vers l'arrière du véhicule 1. Les bords tombés 26 sont donc orientés du même côté de la partie frontale inférieure 21F de la jupe inférieure 21 que les joues inférieures 21F de la jupe inférieure 21. De la même manière, la peau supérieure 22 comporte des rebords formant des bords tombés, autour des ouvertures de phare, de forme complémentaire à la forme des bords tombés 26 des extensions 23. Chaque extension 23 suit la forme de la peau supérieure 22 qui lui fait face, et est au contact de ladite peau supérieure 22. Les rebords de la peau supérieure 22 suivent les bords tombés 26 des extensions. Localement, les extensions 23 comportent des formes en creux 24, orientées vers l'arrière du véhicule 1, qui rigidifient lesdites extensions 23. Dans la figure 2, ces formes en creux 24 sont situées au niveau de la jonction entre le bords tombés 26 et le reste de l'extension 23.

Les extensions 23 s'étendent verticalement jusqu'aux ouvertures de phare situées dans la peau supérieure 22. Les extensions 23 s'arrêtent donc juste en-dessous de ces ouvertures.

Comme illustré en figure 3, chaque projecteur 3 comporte une vitre transparente 31 et un boîtier 32 supportant des sources de lumière et des réflecteurs orientant la lumière vers la route. La vitre 31 comporte une première partie 310 s'étendant verticalement dans toute l'ouverture de phare située dans la peau supérieure 22, et une deuxième partie 311 située derrière la peau supérieure 22, en-dessous la première partie 310 de la vitre 31 et en-dessous l'ouverture de phare. La deuxième partie 311 est en retrait vers l'arrière du véhicule 1 par rapport à la première partie 310. La vitre 3 comporte une zone en saillie 33 vers l'avant du véhicule 1 dans la deuxième partie 311, distante de la première partie 310 dans la direction verticale Z. Le bord de la peau supérieure 22 le long de l'ouverture de phare et le bord tombé 26 à l'extrémité de l'extension 23 entrent tous les deux dans l'espace situé entre la première partie 310 de la vitre 31 et la zone en saillie 33. Cette zone en saillie 33 forme un moyen de maintien 33 qui positionne et maintient la peau supérieure 22 et l'extension 23 par rapport au projecteur 3. Ce moyen de maintien 33 permet un positionnement précis de la peau supérieure 22 par rapport à la vitre 31 du projecteur 3, notamment suivant l'axe vertical Z.

En variante, le moyen de maintien est réalisé par une partie en saillie vers l'avant du véhicule 1 issue du boîtier 32 du projecteur 3. En autre variante, le moyen de maintien est une pièce spécifique fixée à un élément de la structure du véhicule 1.

Dans le mode de réalisation décrit dans les figures 1 à 3, la peau supérieure 22 comporte l'ouverture de phare. En variante, les projecteurs 3 sont disposées entre un bord supérieur de la peau supérieure 22 et le capot 4 du véhicule 1. Dans ce cas, les moyens de maintien 33 coopère avec ce bord supérieur de la peau supérieure 22, et l'extrémité de l'extension 23 opposé à la jupe inférieure 21 longe ce bord supérieur de la peau supérieur 22 et coopère aussi avec le moyen de maintien 33. Dans cette variante, le moyen de maintien 33 peut être réalisée aussi par une partie en saillie issue d'une partie du projecteur 3 située derrière la peau supérieure 22.

La jupe inférieure 21 comporte une entrée d'air 211 située entre les deux ouvertures 210. Cette entrée d'air 211 permet d'apporter de l'air frais pour le refroidissement d'un radiateur du moteur du véhicule 1.

La description décrit une application de l'invention pour former un parechoc 2 avant de véhicule 1. La même description s'applique à la réalisation d'un parechoc arrière de véhicule, les projecteurs de phare étant remplacés par des feux de signalisation, et les joues latérales s'étendant vers l'avant du véhicule.

## Revendications

1. Jupe inférieure (21) de parechoc (2) destinée à être fixée sur un véhicule (1) pour former la partie basse d'un parechoc (2) avant ou arrière d'un véhicule lorsqu'un tel parechoc (2) est installé sur un véhicule (1), comportant une partie frontale inférieure (21F) destinée à être placée en face avant ou arrière du véhicule lorsque la jupe inférieure (21) est fixée au véhicule (1), deux joues latérales inférieures (21J) disposées chacune sur des bords opposés de la partie frontale inférieure (21F), s'étendant toutes les deux du même côté de la partie frontale inférieure (21F) et destinées à s'étendre sur chacun des flancs latéraux du véhicule (1) depuis la partie frontale inférieure (21F) lorsque la jupe inférieure (21) est fixée au véhicule (1), des moyens de fixation (25) disposés le long d'un bord supérieur de la jupe inférieure (21) qui forme un bord continu le long des deux joues latérales inférieures (21J) et de la partie frontale inférieure (21F), lesdits moyens de fixation (25) étant destinés à fixer une peau supérieure (22) de parechoc (2) sur ladite jupe inférieure (21F), **caractérisé en ce que** la jupe inférieure (21) comporte en outre deux extensions (23) s'étendant depuis le bord supérieur de la jupe inférieure (21), sensiblement dans le prolongement de la partie frontale inférieure (21F) et disposées chacune de manière symétrique de chaque côté d'un plan médian de la jupe inférieure (21), distantes l'une de l'autre symétriquement par rapport à ce plan médian.

2. Jupe inférieure (21) suivant la revendication précédente, **caractérisée en ce qu'**elle comporte deux ouvertures (210) disposées sur la partie frontale inférieure (21F) de la jupe inférieure (21), chacune en vis-à-vis d'une des extensions (23).

3. Jupe inférieure (21) suivant l'une des revendications précédentes, **caractérisée en ce que** les extensions (23) comportent des bords tombés (26) sur leurs extrémités opposées à celles reliées à la jupe inférieure (21), lesdits bords tombés (26) étant orientés du même côté de la partie frontale inférieure (21F) de la jupe inférieure (21) que celui dans lequel s'étendent les joues latérales inférieures (21J).

4. Jupe inférieure (21) suivant l'une des revendications précédentes, **caractérisés en ce que** les extensions (23) comportent des formes en creux (24) de sorte à rigidifier lesdites extensions (23).

5. Parechoc (2) comportant une jupe inférieure (21) suivant l'une des revendications précédentes et une peau supérieure (22) fixée à la jupe inférieure (21) sur les moyens de fixation (25), ladite une peau supérieure (22) étant disposée le long du bord supérieur de la jupe inférieure (21) comportant les moyens de fixation (25).

6. Parechoc (2) suivant la revendication 5, **caractérisée en ce que** les extensions (23) sont au contact de la peau supérieure (22).

7. Véhicule (1) comprenant un parechoc (2) suivant l'une des revendications 5 ou 6.

8. Véhicule (1) suivant la revendication 7, **caractérisé en ce qu'**il comporte des moyens de positionnement (33) coopérant avec les extrémités des extensions (23).

9. Véhicule suivant la revendication 8, **caractérisé en ce qu'**il comporte des phares (3) et/ou des feux de signalisation, lesdits phares (3) ou des feux de signalisation comprenant les moyens de positionnement (33).

10. Véhicule (1) suivant la revendication 9, **caractérisé en ce que** les phares (3) et/ou les feux de signalisation comportent une vitre (31), le moyen de positionnement (33) étant formé par une partie en saillie de ladite vitre (31) dirigée vers l'extension (23).

## Patentansprüche

1. Untere Schürze (21) eines Stoßstange (2) zur Befestigung an einem Fahrzeug (1) zur Bildung des Unterteils eines vorderen oder hinteren Stoßstange (2) eines Fahrzeugs, wenn ein solcher Stoßstange (2) an einem Fahrzeug (1) angebracht ist, mit einem unteren Frontteil (21F) zum Anbringen an der Vorder- oder Rückseite des Fahrzeugs, wenn die untere Schürze (21) an dem Fahrzeug (1) befestigt ist, wobei zwei untere Seitenwangen (21J) jeweils an gegenüberliegenden Rändern des unteren Frontteils (21F) angeordnet sind, die sich beide auf derselben Seite erstrecken der untere Frontteil (21F), der dazu bestimmt ist, sich von dem unteren Frontteil (21F) an jeder Seitenflanke des Fahrzeugs (1) zu erstrecken, wenn die untere Schürze (21) an dem Fahrzeug (1) befestigt ist, Befestigungsmittel (25), die entlang einer oberen Kante der unteren Schürze (21) angeordnet sind, die eine durchgehende Kante entlang der beiden unteren Seitenwangen (21J) und des unteren Frontteils (21F) bildet, wobei die Befestigungsmittel (25) dazu bestimmt sind, eine obere Haut (22) des Stoßstange (2) an der Schürze zu befestigen Untere Schürze (21F), **dadurch gekennzeichnet, dass** die untere Schürze (21) ferner zwei Verlängerungen (23) aufweist, die sich von der Oberkante der unteren Schürze (21) im Wesentlichen in der Verlängerung des unteren Vorderteils (21F) erstrecken und jeweils symmetrisch zu jeder Seite einer Mittelebene der unteren Schürze (21) angeordnet sind, die symmetrisch in Bezug auf diese Mittelebene beabstandet sind.

2. Untere Schürze (21) nach dem vorhergehenden Anspruch, **dadurch gekennzeichnet, dass** sie zwei Öffnungen (210) aufweist, die am unteren Stirnteil (21F) der unteren Schürze (21) angeordnet sind, wobei jede einer der Verlängerungen (23) gegenüberliegt.

3. Untere Schürze (21) nach einem der vorhergehenden Ansprüche, **dadurch gekennzeichnet, dass** die Verlängerungen (23) an ihren Enden, die denjenigen gegenüberliegen, die mit der unteren Schürze (21) verbunden sind, abfallende Ränder (26) aufweisen, wobei die abfallenden Ränder (26) auf derselben Seite des unteren Stirnabschnitts (21F) der unteren Schürze (21) ausgerichtet sind, auf die sich die unteren Seitenwangen (21J) erstrecken.

4. Untere Schürze (21) nach einem der vorhergehenden Ansprüche, **dadurch gekennzeichnet, dass** die Verlängerungen (23) vertiefte Formen (24) aufweisen, um die Verlängerungen (23) zu versteifen.

5. Stoßstange (2) mit einer unteren Schürze (21) nach einem der vorhergehenden Ansprüche und einer oberen Haut (22), die an der unteren Schürze (21) an den Befestigungsmitteln (25) befestigt ist, wobei die obere Haut (22) entlang der oberen Kante der unteren Schürze (21) mit den Befestigungsmitteln (25) angeordnet ist.

6. Stoßstange (2) nach Anspruch 5, **dadurch gekennzeichnet, dass** die Verlängerungen (23) die obere Haut (22) berühren.

7. Fahrzeug (1) mit einem Stoßstange (2) nach einem der Ansprüche 5 oder 6.

8. Fahrzeug (1) nach Anspruch 7, **dadurch gekennzeichnet, dass** es Positioniermittel (33) aufweist, die mit den Enden der Verlängerungen (23) zusammenwirken.

9. Fahrzeug nach Anspruch 8, **dadurch gekennzeichnet, dass** es Scheinwerfer (3) und/oder Signalleuchten aufweist, wobei die Scheinwerfer (3) oder Signalleuchten die Positioniermittel (33) aufweisen.

10. Fahrzeug (1) nach Anspruch 9, **dadurch gekennzeichnet, dass** die Scheinwerfer (3) und/oder die Signalleuchten eine Fensterscheibe (31) aufweisen, wobei die Positioniereinrichtung (33) durch einen vorspringenden Teil der Fensterscheibe (31) gebildet ist, der der Verlängerung (23) zugewandt ist.

## Claims

1. Lower skirt (21) of bumper (2) intended to be fixed to a vehicle (1) to form the lower part of a front or rear bumper (2) of a vehicle when such a bumper (2) is installed on a vehicle (1), comprising a lower front part (21F) intended to be placed in the front or rear face of the vehicle when the lower skirt (21) is fixed to the vehicle (1), two lower lateral cheeks (21J) each arranged on opposite edges of the lower front part (21F), both extending on the same side of the lower front part (21F) and intended to extend on each of the lateral flanks of the vehicle (1) from the lower front part (21F) when the lower skirt (21) is fixed to the vehicle (1), fixing means (25) arranged along an upper edge of the lower skirt (21) which forms a continuous edge along the two lower lateral cheeks (21J) and the lower front part (21F), said fixing means (25) being intended to fix an upper bumper skin (22) (2) on said lower skirt (21F) F), **characterized in that** the lower skirt (21) further comprises two extensions (23) extending from the upper edge of the lower skirt (21), substantially in the extension of the lower front part (21F) and each disposed symmetrically on each side of a median plane of the lower skirt (21), spaced apart from each other symmetrically with respect to this median plane.

2. Lower skirt (21) according to the preceding claim, **characterized in that** it comprises two openings (210) arranged on the lower front part (21F) of the lower skirt (21), each facing one of the extensions (23).

3. Lower skirt (21) according to one of the preceding claims, **characterized in that** the extensions (23) have flanged edges (26) at their ends opposite those connected to the lower skirt (21), said flanged edges (26) being oriented on the same side of the lower front part (21F) of the lower skirt (21) as that in which the lower lateral cheeks (21J) extend.

4. Lower skirt (21) according to one of the preceding claims, **characterized in that** the extensions (23) comprise hollow shapes (24) so as to stiffen said extensions (23).

5. A bumper (2) comprising a lower skirt (21) according to one of the preceding claims and an upper skin (22) fixed to the lower skirt (21) on the fixing means (25), said upper skin (22) being arranged along the upper edge of the lower skirt (21) comprising the fixing means (25).

6. A bumper (2) according to claim 5, **characterized in that** the extensions (23) are in contact with the upper skin (22).

7. Vehicle (1) comprising a bumper (2) according to one of claims 5 or 6.

8. Vehicle (1) according to claim 7, **characterized in that** it comprises positioning means (33) cooperating with the ends of the extensions (23).

9. Vehicle according to claim 8, **characterized in that** it comprises headlights (3) and/or signalling lights, said headlights (3) or signalling lights comprising the positioning means (33).

10. Vehicle (1) according to claim 9, **characterized in that** the headlights (3) and/or the signalling lamps comprise a window (31), the positioning means (33) being formed by a protruding part of the said window (31) directed towards the extension (23).
